# EUROPÄISCHE PATENTSCHRIFT

(11) **EP 1 534 630 B1**
(45) Veröffentlichungstag und Bekanntmachung des Hinweises auf die Patenterteilung: **26.04.2006**
(21) Anmeldenummer: 04710790.9
(22) Anmeldetag: 13.02.2004
(51) Int. Cl.: C01B 21/14

(54) **VERFAHREN ZUR HERSTELLUNG EINER WÄSSRIGEN LÖSUNG VON HYDROXYLAMIN**
METHOD FOR THE PRODUCTION OF AN AQUEOUS HYDROXYLAMINE SOLUTION
PROCEDE POUR REALISER UNE SOLUTION AQUEUSE D'HYDROXYLAMINE

(30) Priorität: 27.03.2003 DE 10314492
(43) Veröffentlichungstag der Anmeldung: 01.06.2005
(73) Patentinhaber: Domo Caproleuna GmbH, 06237 Leuna (DE)
(72) Erfinder: LEETSCH, Norbert, 06237 Leuna (DE); STRECKER, Thomas, 06766 Tahlheim (DE); KRETSCHMAR, Manfred, 06120 Halle (DE); SEIDLER, Joachim, 06124 Halle (DE)
(74) Vertreter: Wablat, Wolfgang
(86) Internationale Anmeldenummer: PCT/DE2004/000301
(87) Internationale Veröffentlichungsnummer: WO 2004/085308

(56) Entgegenhaltungen:
- WO-A-97/22551
- US-A- 5 472 679
- US-A- 5 837 107
- US-A1- 2001 011 633
- US-B1- 6 299 734
- US-B1- 6 534 681

## Beschreibung

Die Erfindung betrifft ein Verfahren zur Herstellung einer wässrigen Lösung von freiem Hydroxylamin (HA) durch gleichzeitige Gegenstrombehandlung eines HA-Salzes mit Ammoniak oder Ammoniakwasser und destillative Abtrennung und Aufkonzentrierung der wässrigen HA-Lösung. Erfindungsgemäß führt dies zur Erhöhung der Sicherheit und zur Verringerung der Verluste des Verfahrens zur Herstellung wässriger Lösungen von freiem HA.

Bei der Herstellung von HA sind besondere Bedingungen der technologischen Sicherheit erforderlich,' weil eine Eigenschaft des HA seine thermische Instabilität ist, d.h. es zerfällt unter Explosion, insbesondere in Gegenwart von Metallionen, in stark basischem Medium sowie bei hohen Temperaturen und Konzentrationen. Die thermische Zersetzung des HA bedingt irreversible Verluste und verringert die Produktausbeute.

Die Hauptrichtungen der Vervollkommnung des Verfahrens zur Herstellung von HA sind: Herstellung von HA hoher Reinheit, insbesondere für die Elektronikindustrie; Erhöhung der Wirtschaftlichkeit des Verfahrens der HA-Herstellung und Erhöhung der Sicherheit des Verfahrens der HA-Herstellung.

Aus der Patentschrift DE 19936594 A1 ist ein Verfahren zur Herstellung einer hochreinen stabilisierten wässrigen Lösung von freiem HA durch Behandlung einer wässrigen, Anionen enthaltenden wässrigen Lösung von freiem HA mit einem Anionenaustauscher in der Basenform, der mit einem HA-Stabilisator versetzt ist, bekannt. Die Basenform des Anionenaustauschers wird mittels einer beliebigen Base, insbesondere Ammoniak, zubereitet.

Der Nachteil dieses bekannten Verfahrens sind seine hohen Kosten, die durch den hohen Preis des Anionenaustauschers bedingt sind. Dabei ist das Verfahren nicht hochproduktiv, besonders wenn es sich auf den Einsatz der Lösungen in der Elektronikindustrie beschränkt.

Im US-Patent 5472679 wird ein Verfahren zur Herstellung einer wässrigen HA-Lösung durch Reaktion einer Lösung von Hydroxylammoniumsulfat (HAS) mit einer geeigneten Base bei einer Temperatur von etwa 60°C beschrieben. Das erhaltene Gemisch wird danach einer Destillation unter verringertem Druck bei einer Temperatur unterhalb von 65°C unterworfen. Bei einer höheren Temperatur treten wesentliche Verluste an HA infolge seiner thermischen Zersetzung auf. Man erhält einen festen Sumpfrückstand (bei der Freisetzung des HA gebildetes Salz) und als Destillat eine wässrige HA-Lösung, die 16 bis 23 Ma.-% HA enthält.

Dieses Verfahren besitzt eine unzureichende technologische Sicherheit. Sie besteht darin, dass bei der Eindampfung eine Abtrennung von Wasser und eine Erhöhung der Konzentration des HA erfolgen. Es ist bekannt, dass die Neigung zur Zersetzung des HA mit Erhöhung der Konzentration des HA auf > 70 Ma.-% zunimmt. Es wächst die Gefahr, dass im Zusammenhang mit einer hohen HA-Konzentration der Vorgang einer explosionsartigen Zersetzung des HA initiiert wird.

Außerdem weist das vörliegende Verfahren zur Herstellung einer wässrigen HA-Lösung eine mangelhafte Zuverlässigkeit des Anlagenbetriebes auf, da sich der im Verfahren erhaltene feste Sumpfrückstand (z.B. Natriumsulfat) an den Innenwänden der Apparate abscheidet und schwer entfernbare Ablagerungen bildet, die die Funktion der Apparate stören und Bedingungen für das Auftreten einer technologischen Havarie schaffen. Zu den Mängeln des Verfahrens muss man auch die unzureichende Wirtschaftlichkeit rechnen. Diese besteht darin, dass für die Durchführung der Destillation unter vermindertem Druck Vakuumpumpen oder Dampfabsaugvorrichtungen benötigt werden, was sowohl die energetischen als auch die Betriebskosten des Verfahrens erhöht.

Mit der Patentschrift WO 97/22551 ist ein Verfahren bekannt zur Herstellung einer wässrigen Lösung von freiem HA durch Behandlung eines HA-Salzes mit einer Base, destillative Auftrennung der erhaltenen Lösung in eine wässrige HA-Fraktion und in eine Salzfraktion bei einer Temperatur oberhalb von 80°C sowie nachfolgende Aufkonzentrierung der wässrigen HA-Lösung durch Strippen mit Dampf in einer Destillationskolonne.

Ein Nachteil dieses Verfahrens ist im Falle der Verwendung von Ätznatron als Base die Verunreinigung der HA-Lösung mit Natriumionen. Die Gegenwart eines Metallions in dem Produkt schafft die Gefahr einer explosionsartigen Zersetzung des HA, was die niedrige technologische Sicherheit des bekannten Verfahrens charakterisiert. Außerdem kann im Sumpf der Strippkolonne eine Salzausfällung (d.h. Natriumsulfat) auftreten, was im Verfahren die Zuverlässigkeit des Anlagenbetriebes verringert, eine sorgfältige Überwachung der technologischen Parameter voraussetzt und die Kosten des Verfahrens wesentlich erhöht.

Ein Nachteil des bekannten Verfahrens ist im Falle der Verwendung von Ammoniak als Base die unzureichend hohe Ausbeute an HA, die auf einem Niveau von 60-70% liegt. Dies ist dadurch bedingt, dass Ammoniak eine schwächere Base als z.B. Ätznatron ist, welches HA aus HA-Sulfat vollständig verdrängt. In dem bekannten Verfahren werden über 30% HA in Form von HAS als Abwasser mit dem Sumpfstrom der Destillationskolonne ausgeschleust, der Abwasseraufbereitung zugeführt und so ihre weitere Verwendung vollkommen ausgeschlossen. Die erheblichen Verluste an HA mit den Abwässern und die Notwendigkeit ihrer Aufbereitung erhöhen bedeutend die Aufwendungen (Kosten) des bekannten Verfahrens, was seine industrielle Anwendung nicht wirtschaftlich macht.

Aus der Patentschrift DE 10004818 A1 ist ein Verfahren zur Verarbeitung von HA enthaltenden Lösungen durch Strippen des HA mit Wasserdampf bekannt. Der Nachteil dieses bekannten Verfahrens besteht in dem hohen Energiebedarf aufgrund der Notwendigkeit der Verfahrensdurchführung als Destillation im Vakuum. Die Nutzung von eigenem Energieaufkommen fehlt in dem bekannten Verfahren.

Mit der Patentschrift WO 99/07637 ist ein Verfahren zur Herstellung einer wässrigen Lösung von freiem HA durch gleichzeitige Gegenstrombehandlung einer Lösung eines HA-Salzes mit der Base Ammoniak oder Ammoniakwasser, Auftrennung der erhaltenen Lösung in eine wässrige HA-Lösung und in eine Salzfraktion durch Destillation, Aufkonzentrierung der wässrigen HA-Lösung durch Destillation mit Dampf in einer Reaktionsdestillationskolonne bekannt. Analoge Anmeldungen sind DE 197 33 681 A1 und EP 1 012 114.

Die Hauptnachteile dieses Verfahrens sind seine unzureichende technologische Sicherheit und die erhöhten Verluste an HA aufgrund seiner thermischen Zersetzung. Die unzureichende Sicherheit des Verfahrens ist sowohl durch die physikalischen Eigenschaften des HA als auch durch die technologischen Besonderheiten des Verfahrens seiner Herstellung bedingt. Außerdem sind die Bedingungen der Sicherheit für das bekannte Verfahren nicht über den gesamten Druckbereich unterhalb (unter Vakuum) und oberhalb des Atmosphärendruckes gewährleistet. Bei der Anwendung des bekannten Verfahrens unter Vakuum sind die thermische Zersetzung des HA und seine Verluste unbedeutend, aber es besteht die Gefahr, dass im Falle der Entspannung der Reaktionsdestillationskolonne Luft aus der Umgebung angesaugt wird und in der Reaktionskolonne ein explosives Ammoniak/Luft-Gemisch entstehen kann. Außerdem kommt es durch Reaktion des HA mit dem Luftsauerstoff zur Bildung von Nitriten, die das Risiko einer Explosion erhöhen.

Die Gefahr der lokalen Bildung eines explosiven Ammoniak/Luft-Gemisches unter den Bedingungen der Entspannung der unter Vakuum betriebenen Kolonne besteht nicht nur im Reaktions-, sondern auch im Destillationsteil der Kolonne. So vollzieht sich bei der Anwendung des bekannten Verfahrens unter den Bedingungen des Überschusses an Ammoniak (bei Ausschluss von HAS-Verlusten) im Reaktionsteil der Kolonne seine Strippung und in der Gasphase die Abführung aus dem Kopf der Destillationskolonne. Die Gegenwart von Ammoniak sowohl im Reaktions- als auch im Destillationsteil der Kolonne verringert wesentlich die technologische Sicherheit des bekannten Verfahrens unter Vakuumbetrieb.

Bei der Durchführung des bekannten Verfahrens oberhalb von atmosphärischem Druck (d.h. unter erhöhtem Druck) ist die Bildung eines explosiven Ammoniak/Luft-Gemisches ausgeschlossen (im Fall der Entspannung der Kolonne), jedoch besteht folgende Gefahr: bei Erhöhung der Temperatur des Prozesses über 100°C nehmen entsprechend den Bedingungen des Dampf/Flüssigkeits-Gleichgewichtes die HA-Verluste bedeutend zu, und es erhöht sich das Risiko des Auftretens einer Explosion von der thermischen Zersetzung des HA her. In dem bekannten Verfahren führt die Verwendung von Wasserdampf mit einem Druck von etwa 1,5 bara (Temperatur etwa 130°C) zu lokalen Überhitzungen der HA-Lösung im Reaktionsteil der Kolonne, was zu einer erhöhten Spaltung des HA führt, und folglich sinkt die Ausbeute an HA. Dies verringert die Produktivität und die Wirtschaftlichkeit des Verfahrens der HA-Herstellung solange, bis der Dampf in den Zustand des thermodynamischen Gleichgewichts mit der Lösung übergeht. Bereiche der lokalen Überhitzung der HA-Lösung können sich bis in bedeutende Höhe des Reaktionsteils der Kolonne erstrecken.

Somit führt die Verringerung der Sicherheit des bekannten Verfahrens der HA-Herstellung zu folgenden Nachteilen:

Erhöhung der thermischen Zersetzung des HA mit dem Risiko der Explosion aufgrund der erhöhten Temperatur des Prozesses oberhalb von Atmosphärendruck.
Verringerung der Ausbeute an HA durch die erhöhte thermische Zersetzung.
Gefahr der Bildung eines explosiven Ammoniak/Luft-Gemisches und von Nitriten bei der Entspannung der unterhalb des Atmosphärendrucks (unter Vakuum) betriebenen Kolonne.

Die Aufgabe der Erfindung besteht deshalb in der Erhöhung der Sicherheit des Verfahrens zur Herstellung wässriger Lösungen von freiem HA und der Erhöhung der Ausbeute an freiem HA.

Diese Aufgabe wird gelöst mit einem Verfahren zur Herstellung einer wässrigen Lösung von freiem HA durch gleichzeitige Gegenstrombehandlung einer Lösung eines HA-Salzes mit Ammoniak oder Ammoniakwassser, destillative Auftrennung der erhaltenen Lösung in wässrige Lösungen von HA und einer Salzfraktion unter überatmosphärischem Druck, destillative Aufkonzentrierung der wässrigen HA-Lösung im Gegenstrom mit einem Strippmedium in einer Reaktionsdestillationskolonne mit einem Sumpfverdampfer, wobei erfindungsgemäß als Strippmedium ein Gemisch aus Wasserdampf und einem inerten nichtkondensierbaren Gas verwendet und die Temperatur des Prozesses bei festgelegtem Druck durch die Menge (in Masse-%, bezogen auf die Menge der HAS-Lösung) an inertem nichtkondensierbaren Gas am Eingang in die Kolonne geregelt wird.

Als inertes nichtkondensierbares Gas verwendet man vorzugsweise Stickstoff.

Die Regelung der Temperatur des Prozesses erfolgt nach dem Prinzip:
Erhöhung des Anteils an inertem nichtkondensierbarem Gas führt zu einer Verringerung der Temperatur, die Erniedrigung des Anteils dieses Gases führt zu einer Temperaturerhöhung.

Zweckmäßig führt man den Prozess bei einem Druck in der Kolonne im Bereich von 1,05 bis 2,5 bara, vorzugsweise von 1,1 bis 1,8 bara durch.

Das Gewichtsverhältnis des inerten nichtkondensierbaren Gases zur Speisemenge HAS-Lösung soll das 0,44- bis 5,8-fache, vorzugsweise das 1,8- bis 5,4-fache betragen.

Der Charakter der Unterscheidungsmerkmale der dargelegten Lösung und ihr Einfluss auf die Lösung der gestellten Aufgaben besteht in folgendem:
Die Prozesse in der Reaktionsdestillationskolonne führt man - wie an sich bekannt - oberhalb des Atmosphärendrucks durch. Eine solche technische Lösung gewährleistet eine hohe Sicherheit des Verfahrens unter den Bedingungen der Entspannung der Reaktionsdestillationskolonne.

Als Strippmedium verwendet man ein Gemisch aus Wasserdampf und einem inerten nichtkondensierbaren Gas. Das ist erfindungswesentlich. Weil man das Verfahren im Gemisch mit einem inerten nichtkondensierbaren Gas durchführt, gewährleistet dies eine Erniedrigung der Temperatur des Prozesses, was die Ausbeute an HA durch Senkung seiner Verluste infolge thermischer Zersetzung steigert und die Sicherheit des Verfahrens durch Verringerung des Risikos einer Explosion infolge der thermischen Zersetzung des HA erhöht.

Die Gegenwart eines inerten nichtkondensierbaren Gases in der Dampfphase bei der Realisierung von Stoffaustauschprozessen (Behandlung einer Lösung eines HA-Salzes mit einer Base, destillative Auftrennung der erhaltenen Lösung in eine wässrige HA-Lösung und in eine Salzfraktion, destillative Aufkonzentrierung der wässrigen HA-Lösung) bringt einen neuen technologischen Effekt hervor, nämlich die Erniedrigung der Temperatur für die Durchführung der Prozesse in der Reaktionsdestillationskolonne bei identischem Druck. Das physikalische Wesen der Temperaturabsenkung im technologischen Prozess durch die Gegenwart eines inerten nichtkondensierbaren Gases beruht auf der Veränderung der Zusammensetzung der Dampfphase durch Veränderung der Partialdrücke ihrer Komponenten. In der erfindungsgemäßen Lösung besteht die Dampfphase aus einem nichtkondensierbaren Gas, Wasserdampf und HA. Die Erweiterung der Zusammensetzung der Dampfphase um die nichtkondensierbare Komponente bewirkt die Absenkung des Partialdruckes der übrigen Komponenten (d.h. Wasserdampf, HA und Ammoniak bei einem davon angewendeten Überschuss). Somit verringert unter identischem Prozessdruck die Gegenwart der nichtkondensierbaren Komponente in der Dampfphase die Partialdrücke des Wasserdampfes und des HA und gewährleistet dadurch eine Absenkung der Temperatur der Stoffaustauschprozesse. Die Erniedrigung der Temperatur des Prozesses beeinflusst unmittelbar die Lösung der gestellten Aufgaben:
die durch die thermische Zersetzung des HA bedingten HA-Verluste werden verringert, was dessen Ausbeute erhöht und die Sicherheit des Verfahrens wird erhöht durch Wegführung der technologischen Prozessparameter in der Reaktionsdestillationskolonne von Bedingungen des Auftretens einer gefährlichen Auswirkung - der thermischen Zersetzung des HA.

Weil das nichtkondensierbare Gas gleichzeitig ein Inertgas ist, d.h. keine chemischen Reaktionen mit am technologischen Prozess beteiligten Stoffen eingeht, gewährleistet dies die technologische Zuverlässigkeit und Sicherheit des neuen Verfahrens.

Die Einführung der neuen Komponente, des inerten nichtkondensierbaren Gases in das bekannte System schließt den Ablauf irgendwelcher Reaktionen in der Kolonne aus, die durch die Gegenwart der neuen Komponente bedingt sind, was die geforderte Reinheit des Endproduktes - der HA-Lösung - gewährleistet. Weil das Gas nicht kondensierbar ist, verhindert diese Verfahrensweise die Lösung nennenswerter Anteile in Komponenten der Flüssigphase und schließt folglich eine Verunreinigung der Produkte aus.

Als inertes nichtkondensierbares Gas sind grundsätzlich alle inerten und nicht beschriebenen Gase geeignet, z.B. Edelgase. In der Produktion wird man jedoch aus ökonomischen Gründen vorzugsweise Stickstoff verwenden. Stickstoff entspricht den notwendigen technologischen Forderungen: Er geht keine chemische Reaktion mit den aufzutrennenden Komponenten ein (d.h. mit Wasser, HA, HAS, Ammoniak und Ammoniumsulfat) und löst sich praktisch nicht in ihnen. Stickstoff besitzt auch solche Eigenschaften wie Verfügbarkeit und niedrige Kosten.

Man führt den Prozess bei einem Druck in der Kolonne im Bereich 105 bis 250 kPa, vorzugsweise von 110 bis 180 kPa, durch. Der vorgeschlagene Druckbereich entspricht auf optimaler Weise den Bedingungen der Prozesssicherheit. Er verhindert eine mögliche Luftzufuhr in den Prozess bei der Entspannung der Kolonne und durch Absenkung der Prozesstemperatur. Die Absenkung der Prozesstemperatur erhöht die Ausbeute an HA durch Verringerung der HA-Verluste infolge thermischer Zersetzung.

Die Prozesstemperatur regelt man bei vorgegebenem Druck über die Menge bzw. den Anteil an inertem nichtkondensierbaren Gas am Eingang in die Kolonne. Diese Verfahrensweise bewirkt in der dargelegten Lösung einen neuen Effekt - die Möglichkeit der Veränderung der Prozesstemperatur bei Konstanz des Prozessdruckes. Dies erlaubt es in der Erfindung, die Vorteile des unter Vakuum betriebenen technologischen Prozesses (erniedrigte Prozesstemperatur, Verringerung der HA-Verluste infolge thermischer Zersetzung, erhöhte Sicherheit) mit den Vorteilen des Prozesses unter atmosphärischem Druck (hohe Zuverlässigkeit des Anlagenbetriebes und niedrige Kosten aufgrund der fehlenden Notwendigkeit vorhandener Anlagen für die Vakuumerzeugung) zu verbinden. Das Auftreten einer neuen technologischen Eigenschaft des beschriebenen Systems (Möglichkeit der Veränderung der Prozesstemperatur bei konstantem Druck) belegt seinen prinzipiellen Unterschied und folglich die Übereinstimmung mit den Kriterien der Erfindung.

Die bei konstantem Druck durch Variation der Menge an zugeführtem inerten nicht-kondensierbaren Gas gegebene Möglichkeit der Veränderung bzw. Regelung der Prozesstemperatur resultiert aus der durch das inerte nichtkondensierbare Gas als Zusatzkomponente bewirkten Veränderung der Zusammensetzung der Dampfphase mit der Folge der Absenkung der Partialdrücke der übrigen Komponenten des Dampf/Gas-Gemisches. Dieser physikalische Zusammenhang führt zu einer der Menge an zugeführtem inerten nichtkondensierbaren Gas proportionalen Absenkung des Siedepunktes der Salzlösung im Sumpf der Kolonne und damit zu einer entsprechenden Absenkung der Temperatur im Gesamtsystem der Kolonne.

Das Verhältnis der Gewichtsmengen des inerten nichtkondensierbaren Gases zur Einspeisemenge an HAS-Lösung beträgt im allgemeinen das 0,44 bis 5,8-fache, vorzugsweise das 1,8- bis 5,4-fache. Diese Lösung gewährleistet eine optimale Beziehung der Parameter Senkung der Prozesstemperatur und Vergrößerung der Kolonnenabmessunge. Die Gegenwart des inerten nichtkondensierbaren Gases im Strippmedium schwächt die Triebkraft der Stoffaustauschprozesse aufgrund der Verringerung der Konzentration der Stoffe in der Dampfphase geringfügig, was eine Vergrößerung der Kontaktoberfläche der Phasen erfordert, die gewöhnlich durch eine Vergrößerung der Abmessungen des Stoffaustaüschapparates erreicht wird. Die Vergrößerung der Apparateabmessungen ist jedoch mit 10 bis 20 % relativ gering.

Das benutzte inerte nichtkondensierbare Gas wird zweckmäßig in den technologischen Prozess zurückgeführt, was zusätzliche Materialaufwendungen des neuen Verfahrens minimiert und die Bewerkstelligung eines ressourcensparenden Prozesses erlaubt.

Das in der Rückführung befindliche Dampf/Gas-Gemisch kühlt man zweckmäßig unter Ausbildung einer Flüssigphase mit nachfolgender Phasentrennung in einer Trennvorlage. Die Kühlung des in der Rückführung befindlichen Dampf/Gas-Gemisches führt durch die Kondensation der Hauptmenge an Feuchtigkeit zur Verringerung des absoluten Feuchtigkeitsgehaltes. Diese Verfahrensweise führt zur Trocknung des inerten nichtkondensierbaren Gases, was sein Abdampfpotential erhöht und eine stärkere Absenkung der Prozesstemperatur nach seiner Zufuhr in die Kolonne ermöglicht.

Die Rückführung des inerten nichtkondensierbaren Gases realisiert man vorteilhaft mittels seiner Überführung in den Zustand des thermischen Gleichgewichts mit dem Stripp-Wasserdampf. Die Überführung des inerten nichtkondensierbaren Gases in den Zustand des thermischen Gleichgewichts mit dem Stripp-Wasserdampf gewährleistet die Angleichung der Temperaturen der Komponenten des Strippmediums. Dies schließt eine lokale Überhitzung der Lösung im Reaktionsteil der Kolonne aus und eliminiert Verluste an HA, die durch seine thermische Zersetzung infolge lokaler Überhitzung bedingt sind.

Die Überführung des inerten nichtkondensierbaren Gases in den Zustand des thermischen Gleichgewichts mit dem Stripp-Wasserdampf realisiert man beispielsweise durch Einleiten des inerten nichtkondensierbaren Gases in die Flüssigkeitssäule des Sumpfraumes der Kolonne vor dem Bodenverdampfer. Diese Verfahrensweise ermöglicht auf beste Art die Nutzung der Wärme der abgehenden Lösung. Bei diesem Verfahren wird das Inertgas im Ergebnis der Kontaktierung mit der im Kreislauf geführten Sumpflösung mit Wasserdampf gesättigt, was die Temperatur im Sumpf der Kolonne absenkt, und das Inertgas wird gleichzeitig mit dem Stripp-Wasserdampf erwärmt.

Bei Überschuss an Ammoniak im Speisestrom führt man zweckmäßigerweise eine Reinigung des zurückgeführten inerten nichtkondensierbaren Gases von Ammoniak in einem Absorber und seine nachfolgende Erwärmung mit dem benutzten Strippmedium durch. Diese Verfahrensweise gewährleistet die Abführung des überschüssigen Ammoniaks aus dem technologischen Prozess, was das System der Steuerung des Prozesses zur Herstellung von HA vereinfacht. Es eröffnet die Möglichkeit der Nutzung des Ammoniaks z.B. in einer Anlage zur Herstellung von Ammoniakwasser.

Die darauf folgende Erwärmung des gereinigten inerten nichtkondensierbaren Gases mit dem benutzten Strippmedium gewährleistet eine wesentliche Erhöhung des Abdampfpotentials des Gases, was zu einer stärkeren Absenkung der Temperatur im Sumpf der Reaktionskolonne beiträgt. Auf diese Weise werden in dem beschriebenen Verfahren eine Erhöhung der Sicherheit des Prozesses und eine Steigerung der Ausbeute an HA erreicht.

Weil das bekannte technologische Verfahren nach DE 197.33 681 A1 bzw. WO 99/07637 um ein zusätzliches Element, nämlich ein inertes nichtkondensierbares Gas'entscheidend geändert wurde, wird die Bildung eines explosiven Ammoniak/Luft-Gemisches durch die Realisierung des Verfahrens oberhalb des atmosphärischen Druckes vermieden, und es wird die thermische Zersetzung des HA durch Absenkung der Temperatur des Prozesses von vornherein verringert. Das war nicht naheliegend, deshalb entspricht diese technische Lösung einer besonderen erfinderischen Leistung.

In dem bekannten Verfahren gibt es nur eine einzige Möglichkeit, die Temperatur des Prozesses zu verändern (abzusenken), nämlich durch die Veränderung (Absenkung) des Nenndruckes in der Kolonne. Dieses Verfahren der Temperatursteuerung des Prozesses stellt erhöhte Anforderungen an die technologische und technische Zuverlässigkeit der Funktion des Systems der Druckregelung in der Kolonne (d.h. des Systems der Vakuumerzeugung und -haltung), welches eine komplizierte Ausrüstung beinhaltet. Dabei sind die Betriebskosten und energetischen Aufwendungen für das System der Vakuumerzeugung und -haltung umso höher, je breiter der geforderte Bereich der Veränderung der Prozesstemperatur ist, weil der Bereich der optimalen Betriebsbedingungen bei solchen Systemen sehr eng ist.

In dem erfindungsgemäßen Verfahren gibt es eine neue Möglichkeit, die Veränderung der Prozesstemperatur unter den Bedingungen der Konstanz des Druckes im Prozess. Dies ermöglicht es in der vorliegenden Erfindung, die Vorteile des unter Vakuum betriebenen technologischen Prozesses (erniedrigte Prozesstemperatur - Verringerung der HA-Verluste infolge thermischer Zersetzung) mit den Vorteilen des unter Atmosphärendruck und oberhalb dessen laufenden Prozesses (hohe Zuverlässigkeit des Anlagenbetriebes und erhöhte Sicherheit des Verfahrens) zu verbinden.

Die Erfindung wird mit folgender Verfahrensbeschreibung erläutert, ohne dass sie hierauf beschränkt ist:

Als Salz des HA wird am häufigsten eine wässrige Lösung von Hydroxylammoniumsulfat (HAS) verwendet. Dieser kann ein Stabilisator zugesetzt werden. Als flüchtige Base zur Gegenstrombehandlung des HA-Salzes in der wässrigen Lösung verwendet man am einfachsten, besonders bei der Durchführung des Prozesses im großtechnischen Maßstab Ammoniakwasser oder Ammoniak.

Die Menge an flüchtiger Base wird so gewählt, daß das HA-Salz vollständig in freies HA überführt wird, oder es wird ein minimaler Überschuss angewendet. Dies kann unter den Bedingungen eines Überschusses an Ammoniak diskontinuierlich oder kontinuierlich und bei Temperaturen vorzugsweise in den Grenzen von 10°C bis 95°C erfolgen. Man erhält eine wässrige Lösung, die freies HA enthält und eine Salzlösung, der das HA entzogen wurde - die Ammoniumsulfatlösung. Die Dampfphase enthält Ammoniak, welches nicht an der Bildungsreaktion des HA beteiligt war.

Die apparative Verfahrensrealisierung zur Freisetzung des HA und die Trennung der erhaltenen Lösung in eine wäßrige HA-Lösung und in die Salzfraktion erfolgen in einer Reaktionsdestillationskolonne durch Behandlung der Lösung des HA-Salzes im Gegenstrom mit Ammoniak und dem Strippmedium in Form eines Gemisches aus Wasserdampf und dem inerten nichtkondensierbaren Gas. Als inertes nichtkondensi.erbares Gas verwendet man vorzugsweise Stickstoff, weil dieser am besten den notwendigen technologischen Forderungen entspricht: Der Reaktionsteil der Kolonne (Reaktionskolonne) kann entweder mit Stoffaustauschböden (Siebböden, Glockenböden) oder Packungen (Sulzer, Raschigringe, Pallringe) ausgerüstet sein. Die Anzahl an theoretischen Böden umfasst den Bereich von 5 bis 30. Die Zufuhr der Lösung des HA-Salzes (Speiselösung) erfolgt am Kopf des Reäktionsteils der Kolonne (am obersten oder an einem der oberen Böden bzw. am oberen Teil der Packung). Erforderlichenfalls wird über dem Einspeisungsboden ein Separator oder Demister zur Abscheidung mitgerissener Tropfen installiert. In der Reaktionskolonne verläuft die Neutralisation und Aufspaltung der Lösung in der Weise, dass die Salzfraktion aus dem Sumpf der Kolonne und die wässrige HA-Lösung in der Höhe des Einspeisungsbodens oder oberhalb dessen abgezogen werden.

Die Reaktionskolonne ist mit einem Umlaufverdampfer ausgestattet, der als einflutiger Rohrbündelwärmeaustauscher ausgeführt ist. Die im Kreislauf geführte Lösung gelangt in den Rohrraum des Wärmeaustauschers, und das Heizmedium (Dampf oder Heißwasser) - in den Rohrzwischenraum des Wärmeaustauschers. Die Temperatur des Heizmediums beträgt 120 bis 130°C. Der Stickstoff wird in den Strom der im Kreislauf geführten Lösung vor dem Sumpfverdampfer eingeleitet.

Die Temperatur in der Reaktionskolonne wird bestimmt durch die Höhe des Druckes und des Verhältnisses der Menge an inertem nichtkondensierbaren Gas zur Menge der Speiselösung und umfasst den Bereich von 65 bis 94°C. Der Druck in der Reaktionskolonne liegt oberhalb des Atmosphärendruckes (Normaldruckes) und liegt im allgemeinen im Bereich von 1,05 bis 2,5 bara, vorzugsweise von 1,1 bis 1,8 bara. Die Realisierung des Verfahrens in der Reaktionskolonne unter einem Druck oberhalb des atmosphärischen gewährleistet eine hohe Sicherheit des Prozesses unter den Bedingungen der Entspannung der Reaktionsdestillationskolonne. Die Regelung des oberhalb des Atmosphärendruckes liegenden Druckes in der Reaktionskolonne erfolgt über die Veränderung des Austritts des Dampf/Gas-Gemisches, das aus dem Kopf der Reaktionsdestillationskolonne abgeführt wird.

Bei einer Konzentration des HA-Salzes in Form von 20 bis 30 Ma.-% HAS in der HAS-Speiselösung beträgt die Wassermenge im Sumpf der Reaktionskolonne das 3- bis 8-fache, vorzugsweise das 4- bis 6-fache der Menge Speiselösung. Die Menge an Stickstoff, der in den Sumpf der Kolonne eingeleitet wird, beträgt das 0,44- bis 5,8-fache, vorzugsweise das 1,8- bis 5,4-fache der Menge Speiselösung. Die Temperatur des eingeleiteten Stickstoffs liegt innerhalb der Grenzen von 50 bis 85°C.

Die dampfförmige oder flüssige HA-Fraktion, die am Kopf des Reaktionsteils der Kolonne entnommen wird, kann in einer Destillationskolonne von beliebiger technischer Ausführung aufkonzentriert werden. Der Speisestrom in Form der dampfförmigen HA-Fraktion wird in den Destillationsteil der Kolonne unterhalb des unteren Bodens oder des unteren Teils der Packung eingeleitet. Wenn der Speisestrom als HA-Lösung auftritt, wird er so in einer Höhe in den Destillationsteil der Kolonne eingeleitet, dass sich die Anzahl der Böden im Abtriebsteil zur Anzahl der Böden im Verstärkerteil wie 1 : 3 verhält. Bei der Destillation erhält man am Kopf des Destillationsteils der Kolonne (Destillationskolonne) ein Gemisch aus Wasserdampf, inertem nichtkondensierbaren Gas und Ammoniak im Falle eines davon angewendeten Überschusses und im Sumpf eine HA-Lösung mit einer Konzentration, die von den Destillationsbedinguhgen abhängt.

Das dampfförmige Gemisch aus dem Kopf des Destillationsteils der Kolonne komprimiert man und kühlt es zweckmäßigerweise auf 50 bis 60°C ab, wobei die Hauptmenge an Feuchtigkeit kondensiert wird. Die apparative Realisierung des Prozesses der Kühlung des Dampf/Gas-Gemisches auf eine Temperatur unterhalb der Kondensation des Wasserdampfes erfolgt dann in einem Teilkondensator.

Wenn man in dem Verfahren zur Herstellung von HA einen Überschuss an Ammoniak anwendet, der in die Reaktionskolonne eingeleitet wird, dann wird das als dampfförmiges Wasserdampf / Stickstoff / Ammoniak-Gemisch am Kopf der Destillationskolonne abgehende Strippmedium komprimiert, zweckmäßigerweise abgekühlt und der Reinigung von Ammoniak zugeführt, wonach man das gereinigte Gas mit der Wärme des abgehenden Strippmediums erwärmt. Die apparative Realisierung der Kühlung des abgehenden Strippmediums und der Erwärmung des gereinigten Gases erfolgt in einem Rohrbündelwärmeaustauscher-Rekuperator.

Die Reinigung des abgehenden gekühlten Strippmediums von Ammoniak erfolgt durch Absorption. Die apparative Realisierung des Reinigungsprozesses erfolgt in einer Absorptianskolonne, die entweder mit Stoffaustauschböden (Siebböden, Glockenböden) oder mit einer Packung (Sulzer, Raschigringe, Pallringe) ausgerüstet werden kann. Die Anzahl der theoretischen Böden umfasst den Bereich 5 bis 12. Die Zufuhr des abgehenden gekühlten Ammoniak enthaltenden Strippmediums erfolgt unter dem unteren Stoffaustauschboden in den Sumpf der Kolonne. Als Absorbens wird Wasser verwendet und in den Kopf der Kolonne (auf den obersten oder auf einen der oberen Böden bzw. auf den oberen Teil der Packung) eingeleitet. Erforderlichenfalls wird über dem obersten Boden ein Separator oder Demister zur Abscheidung mitgerissener Tropfen installiert. In der Absorptionskolonne vollziehen sich so die Absorption des Ammoniaks mit Wasser und die Bildung von Ammoniakwasser in der Weise, dass das Ammoniakwasser aus dem Sumpf der Kolonne abgezogen und das von Ammoniak gereinigte inerte nichtkondensierbare Gas aus dem Kopf der Kolonne abgeleitet werden. Letzteres gelangt zur Anwärmung in den Rohrbündelwärmeaustauscher-Rekuperator, der von dem abgehenden Strippmedium beheizt wird.

Das inerte nichtkondensierbare Gas gelangt nach dem Teilkondensator oder dem Wärmeaustauscher-Rekuperator in die Trennvorlage, in der die Druckregelung der Gasphase und erforderlichenfalls die Trennung der Gasphase und Flüssigphase erfolgen. Die Trennvorlage stellt einen behälterartigen Apparat dar, in dessen oberen Teil ein Demister für eine möglichst vollständige Abscheidung von Tropfen aus der Gasphase angebracht sein kann. Die flüssige Phase aus der Trennvorlage kann als Rücklauf im Destillationsteil der Kolonne und als Speisewasserstrom zur Erzeugung des Wasserdampfes im Sumpf der Reaktionskolonne verwendet werden.

In der Trennvorlage wird die Konstanz des Druckes des Dampf/Gas-Gemisches auf festgelegter Höhe durch automatisierte Zufuhr/Abströmen des inerten nichtkonden-sierbaren Gases von einer äußeren Quelle gewährleistet. Die apparative Realisierung des Prozesses der Aufrechterhaltung des Druckes des Dampf/Gas-Gemisches auf festgelegter Höhe erfolgt mit Hilfe eines Systems von Ein- und Auslaßventilen, die hinter der Trennvorlage angebracht und an diese in ihrem oberen Teil zusammen mit Druckfühlern angeschlossen sind. Wenn der Druck des Dampf/Gas-Gemisches niedriger als der vorgegebene Druckwert ist, öffnet sich das Einlassventil, und es erfolgt Zufuhr des inerten nichtkondensierbaren Gases bis zu dem Zeitpunkt des Erreichens des vorgegebenen Druckwertes. Wenn der Druck des Dampf/Gas-Gemisches den vorgegebenen Druckwert überschritten hat, öffnet sich das Auslassventil, und es erfolgt Austritt der überschüssigen Menge an inertem nichtkondensierbaren Gas in das äußere System bis zu dem Zeitpunkt des Erreichens des vorgegebenen Druckwertes.

Die Regelung der Temperatur in der Reaktionsdestillationskolonne wird durch Regelung der Zufuhr an inertem nichtkondensierbaren Gas am Eingang in die Kolonne bewerkstelligt. Vorzugsweise realisiert man eine Veränderung des Zustroms an inertem nichtkondensierbaren Gas in Abhängigkeit von der Höhe der Einspeisung der 25- bis 30%-igen HAS-Lösung. Die Veränderung des Zustromes an inertem nichtkondensierbaren Gas kann auch in Abhängigkeit von der Temperatur im Reaktionsteil der Kolonne durchgeführt werden. Die apparative Realisierung des Regelungsprozesses wird mittels eines Ventils bewerkstelligt, welches in der Leitung für das inerte nichtkondensierbare Gas am Eingang in die Kolonne angebracht ist. Der Druck in der Leitung vor dem Ventil wird durch geregelte Zufuhr bzw. Abströmen von inertem nichtkondensierbarem Gas auf konstanter Höhe gehalten.

Ausgehend von der beschriebenen Regelung der Temperatur in der Kolonne über die Menge an zugeführtem inerten nichtkondensierbaren Gas in Abhängigkeit von der Menge an eingespeister HAS-Lösung resultiert beispielsweise für eine geforderte konstante Temperatur in der Kolonne von 91 °C innerhalb eines Intervalls der Erhöhung des Prozessdruckes von 1,1 auf 1,8 bar eine notwendige Steigerung der Zufuhr an inertem nichtkondensierbaren Gas von 4,2 auf 10,4 kg pro kg eingespeister HAS-Lösung.

Die Verfahrensrealisierung in der Reaktionskolonne unter überatmosphärischem Druck gewährleistet eine hohe Sicherheit des Prozesses unter den Bedingungen der Entspannung der Reaktionsdestillationskolonne. Weil man den Prozess im Gemisch mit einem inerten nichtkondensierbaren Gas durchführt, ermöglicht dies eine Erniedrigung der Temperatur des Prozesses, was die Ausbeute an HA durch Senkung seiner Verluste infolge thermischer Zersetzung steigert und die Sicherheit des Verfahrens durch Erniedrigung des Risikos einer Explosion durch thermische Zersetzung des HA erhöht.,

Die Veränderung der Menge des inerten nichtkondensierbaren Gases am Eingang in die Kolonne führt in der dargelegten Lösung zum Wirksamwerden eines neuen technologischen Effektes - die Veränderung der Temperatur des Prozesses bei festgelegtem Druck in'der Kolonne. So bewirkt beispielsweise bei einem vorge-gebenen Druck in der Kolonne von 1,1 bar eine Erhöhung der' Menge an zugeführ-tem Stickstoff von 2,1 auf 4,2 kg pro kg eingespeister HAS-Lösung eine Absenkung der Temperatur in der Kolonne von 99 auf 91 °C.

Das Recycling des inerten nichtkondensierbaren Gases beinhaltet die Rückführung des benutzten inerten nichtkondensierbaren Gases in den technologischen Prozess, was zusätzliche Materialaufwendungen des neuen Verfahrens minimiert und die Bewerkstelligung eines ressourcensparenden Prozesses erlaubt.

Die Überführung des inerten nichtkondensierbaren Gases in den Zustand des thermischen Gleichgewichts mit dem Strippwasserdampf im Sumpf der Kolonne gewährleistet die Angleichung der Temperaturen der Komponenten des Strippmediums vor dem Kontakt mit der HA enthaltenden Lösung. Die schließt eine lokale Überhitzung der das HA enthaltenden Lösung in der Reaktionskolonne aus, was Verluste an HA eliminiert, die durch seine thermische Zersetzung aufgrund lokaler Überhitzung bedingt sind.

Die Zufuhr des inerten nichtkondensierbaren Gases in die Sumpflösung vor dem Bodenverdampfer sichert die Nutzung der Wärme der abgehenden Lösung bei gleichzeitiger Erniedrigung der Temperatur im Sumpf der Kolonne durch die Sättigung des Gases mit Wasserdampf.

Das erfindungsgemäße Verfahren hat den Vorteil, dass es die Sicherheit erhöht, unter milden Temperaturbedingungen durchgeführt wird und dass es teilweise die Wärme der abgehenden technologischen Ströme nutzt.

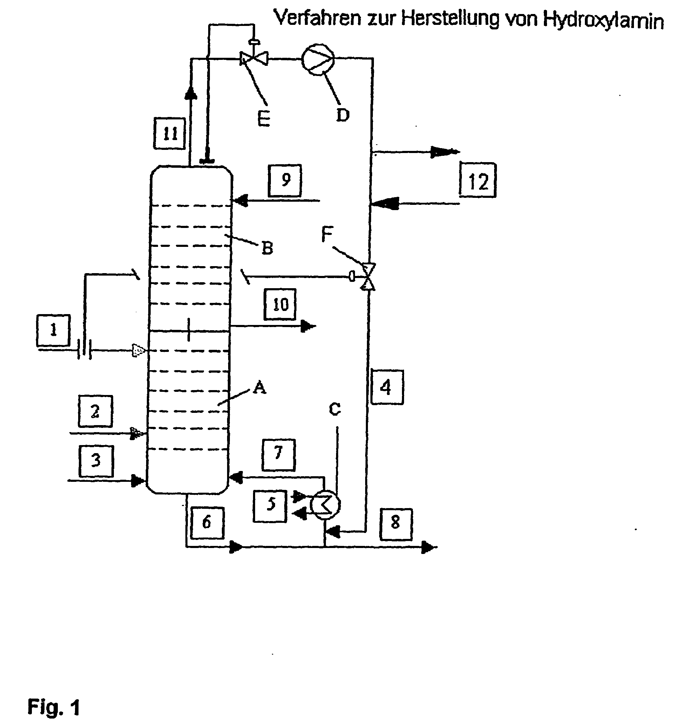

Beispielhaft wird das Verfahren in der Figur 1 dargestellt und beschrieben, es ist darauf aber nicht beschränkt. Dabei bedeuten:
- A: Reaktionsdestillationskolonne, Reaktionsteil (Reaktionskolonne)
- B: Reaktionsdestillationskolonne, Destillationsteil (Destillationskolonne)
- C: Verdampfer (im Sumpf der Reaktorkolonne)
- D: Kompressor
- E: Ventil
- F: Ventil
Einspeisung HAS-Lösung
Einspeisung Ammoniak
Einspeisung Wasser
Einspeisung rückgeführtes Dampf/Gas-Gemisch
Einspeisung Wasserdampf oder Heißwasser
Sumpfstrom Einspeisung Dampf/Flüssigkeitsgemisch über Verdampfer Salzlösung
Einspeisung Rücklauf der Kolonne
Ableitung HA-Lösung
Ableitung Dampf/Gas-Gemisch
Zufuhr bzw. Ableitung inertes nichtkonderisierbares Gas

In der Figur ist das Verfahren zur Freisetzung und Abtrennung des HA in der Reaktionsdestillationskolonne (A + B) unter Verwendung des rückgeführten Dampf/ Gas-Gemisches als Strippmedium dargestellt.

Der untere Teil der Kolonne besteht aus dem Reaktionsteil (A = Reaktionskolonne) und der obere Teil aus dem Destillationsteil (B = Destillationskolonne). Der Sumpf der Reaktionskolonne ist mit dem Verdampfer (C) ausgerüstet.

Die HAS-Lösung (1) wird in den Kopf der Reaktionskolonne eingespeist. In den Sumpf des Reaktionskolonne werden Ammoniak (2), Wasser (3) und das rückgeführte Dampf/Gas-Gemisch (4) eingeleitet, welches aus dem inerten nichtkondensierbaren Gas, Wasserdampf und gegebenenfalls Restanteilen Ammoniak im Falle eines davon in (2) angewendeten Überschusses besteht.

Dieses Dampf/Gas-Gemisch wird in den Strom der im Kreislauf geführten Sumpflösung vor dem Verdampfer (C) eingespeist. Die Menge des in die Kolonne eingeleiteten Dampf/Gas-Gemisches wird in Abhängigkeit von der Speisemenge HAS-Lösung und von der gewählten Temperatur in der Kolonne mittels des Druckregelventils (F) in der Weise verändert, dass die Größe des Masse-Verhältnisses Dampf/Gäs-Gemisch : Speisung HAS-Lösung konstant gehalten wird.

Der Verdampfer (C) wird mit Wasserdampf oder Heißwasser (5) in der Weise beheizt, dass der Hauptteil des Sumpfstromes (6) durch den Verdampfer zirkuliert und in den Sumpf der Kolonne als Dampf/Flüssigkeits-Gemisch (7) zurückläuft. Die Freisetzung und Abtrennung des HA erfolgen in der Reaktionskolonne in der Weise, dass aus dem Sumpf der Kolonne die von HA weitestgehend befreite Salzlösung (8) (Ammoniumsulfatlösung) abgezogen und vom Kopf dieser Kolonne ein salzfreies Dampf/Gas-Gemisch abgeleitet werden. Letzteres besteht aus Wasserdampf, dem inerten nichtkondensierbaren Gas, HA und Anteilen Ammoniak im Falle eines davon in (2) angewendeten Überschusses.

Dieses Dampf/Gas-Gemisch aus dem Kopf der Reaktionskolonne gelangt als Speisestrom in die Destillationskolonne, die mit dem Rücklauf (9) berieselt wird. Die von Salzen befreite HA-Lösung (10) wird über eine seitliche Ableitung oder aber aus dem Sumpf des Destillationskolonne entnommen. Aus dem Kopf der Destillationskolonne wird das von HA befreite Dampf/Gas-Gemisch (11) abgeführt, welches aus Wasserdampf, dem inerten nichtkondensierbaren Gas und Ammoniak im Falle eines davon in (2) angewendeten Überschusses besteht.

Dieses wird im Kompressor (D) verdichtet und danach unter Ausbildung eines Kreislaufs dem Sumpf der Reaktionskolonne zugeführt, zweckmäßigerweise nach weitestgehender Abtrennung der Anteile Wasserdampf und Ammoniak in einem vorgeschalteten Kondensator und in einer Absorptionskolonne, die beide mit Wasser als Kühl- bzw. Absorptionsmedium beaufschlagt sind. Die Aufrechterhaltung eines konstanten Druckes des Dampf/Gas-Gemisches in dem Kreislaufsystem wird darin an geeigneter Stelle durch Zufuhr bzw. Abströmen von inertem nichtkondensierbaren Gas (12) mittels Regelventilen gewährleistet. Der Druck in der Kolonne wird oberhalb des atmosphärischen auf dem vorgegebenen Wert mittels des Regelventils (E) durch Veränderung der Menge des aus dem Kopf der Kolonne abströmenden Dampf/Gas-Gemisches aufrechterhalten.

### Beispiele für die Durchführung des Verfahrens

### Beispiel 1

Gewinnung von freiem HA aus HAS im Gegenstrom mit Ammoniak in einer Reaktionsdestillationskolonne durch direkte Einspeisung in den Sumpf des Reaktionsteils der Kolonne mit gleichzeitiger Abtrennung einer wässrigen HA-Lösung von der Ammoniumsulfatlösung durch Strippen mit einem Gemisch aus Wasserdampf und Stickstoff bei stöchiometrischer Zufuhr des Ammoniaks.

1421 g/h HAS-Lösung wurden direkt in den Kopf des Reaktionsteils der Kolonne eingespeist. Dem Sumpf des Reaktionsteils der Kolonne wurden 3500 g/h Wasser und gleichzeitig 370 g/h Ammoniakwasser und Stickstoff im Gewichtsverhältnis zur Einspeisung an HAS-Lösung von 4,4 : 1 zugeführt. Ein Stabilisator wurde nicht zugesetzt. Der Druck im Sumpf betrug 1,1 bara. Die Sumpfflüssigkeitslösung aus dem Reaktionsteil der Kolonne enthielt etwa 1,70 Ma.-% HA und 16,41 Ma.-% einer summarischen Menge an AS und HAS. Die Temperatur im Sumpf des Reaktionsteils der Kolonne betrug 83,8°C.

Aus dem Kopf des Reaktionsteils der Kolonne trat ein dampfförmiger Strom HA mit Wasserdampf und Stickstoff mit einer HA-Konzentration von 0,36 Mol-% aus, der unter den unteren Boden des Destillationsteils der Kolonne gelangte. Der Strom aus dem Kopf des Destillationsteils der Kolonne enthielt kein HA. Die Sumpfflüssigkeitslösung aus dem Destillationsteil der Kolonne enthielt 8,91 Ma.-% HA. Die Zersetzung an HA betrug 2,14 %. Die Ausbeute an HA betrug dabei 84,17 Ma.-%.

### Beispiel 2

Gewinnung von freiem HA aus HAS im Gegenstrom mit Ammoniak in einer Reaktionsdestillationskolonne mit gleichzeitiger Abtrennung einer wässrigen HA-Lösung von der Ammoniumsulfatlösung durch Strippen mit einem Gemisch aus Wasserdampf und Stickstoff bei Überschuss an Ammoniak.

710 g/h HAS-Lösung wurden direkt in den Kopf des Reaktionsteils der Kolonne eingespeist. Dem Sumpf des Reaktionsteils der Kolonne wurden 3500 g/h Wasser
und gleichzeitig 541 g/h Ammoniakwasser und Stickstoff im Gewichtsverhältnis zur Einspeisung an HAS-Lösung von 5,3 : 1 zugeführt. Der Sumpf der Kolonne wurde beheizt. Der Druck im Sumpf des Reaktionsteils der Kolonne betrug 1,1 bara. Die Freisetzung und Abtrennung des HA erfolgten bei vollständiger Abwesenheit eines Stabilisators.

Die Sumpfflüssigkeitslösung aus dem Reaktionsteil der Kolonne enthielt etwa 0,22 Ma.-% HA. Die Sumpfflüssigkeitslösung aus dem Destillationsteil der Kolonne enthielt 5,47 Ma.-% HA. Die Zersetzung an HA betrug etwa 2%. Die Ausbeute an HA betrug dabei 95,8
Ma.-%.

## Patentansprüche

1. Verfahren zur Herstellung einer wässrigen Lösung an freiem Hydroxylamin (HA) durch gleichzeitige Gegenstrombehandlung einer Lösung eines HA-Salzes mit Ammoniak oder Ammoniakwasser, destillative Auftrennung der erhaltenen Lösung in wässrige Lösungen von HA und einer Salzfraktion unter über-atmosphärischem Druck, destillative Aufkonzentrierung der wässrigen HA-Lösung im Gegenstrom mit einem Strippmedium in einer Reaktionsdestillationskolonne mit einem Sumpfverdampfer, **dadurch gekennzeichnet, dass** als Strippmedium ein Gemisch aus Wasserdampf und einem inerten nichtkondensierbaren Gas verwendet und die Temperatur des Prozesses bei festgelegtem Druck durch die Menge an inertem nichtkondensierbarem Gas am Eingang in die Kolonne geregelt wird.

2. Verfahren gemäß Anspruch 1 **dadurch gekennzeichnet, dass** man als inertes nichtkondensierbares Gas Stickstoff verwendet.

3. Verfahren gemäß Anspruch 1 und 2 **dadurch gekennzeichnet, dass** die Regelung der Temperatur des Prozesses durch Erhöhung des Anteils an inertem nichtkondensierbaren Gas zu einer Verringerung der Temperatur bzw. durch Erniedrigung des Anteils dieses Gases zu einer Temperaturerhöhung führt.

4. Verfahren nach einem oder mehreren der Ansprüche 1 bis 3, **dadurch gekennzeichnet, dass** man den Prozess bei einem Druck in der Kolonne im Bereich von 1,05 bis 2,5 bara, vorzugsweise von 1,1 bis 1,8 bara, durchführt.

5. Verfahren nach einem oder mehreren der Ansprüchen 1 bis 4 **dadurch gekennzeichnet, dass** das Gewichtsverhältnis des inerten nichtkondensierbaren Gases zur Speisemenge (wässrige Lösung des HA-Salzes) das 0,44 bis 5,8-fache, vorzugsweise das 1,8- bis 5,4-fache beträgt.

## Claims

1. A method for producing an aqueous solution of free hydroxylamine (HA) using simultaneous countercurrent treatment of a solution of a HA salt with ammonia or ammonia water, separation of the HA solution obtained by distillation into aqueous solutions of HA and a salt fraction under a pressure above the atmospheric pressure, reconcentration by distillation of the aqueous HA solution in the countercurrent with a strip medium in a reactive distillation column with a liquid-phase evaporator, **characterized in that** the stripping medium is a mixture of steam and a non-condensable inert gas and **in that** the process temperature is controlled at a defined pressure by the quantity of non-condensable inert gas at the column inlet.

2. The method according to claim 1, **characterized in that** nitrogen is used as the non-condensable inert gas.

3. The method according to claims 1 and 2, **characterized in that** controlling the process temperature by increasing the portion of non-condensable inert gas results in a drop in temperature and controlling the process temperature by decreasing the portion of said gas results in an increase in temperature.

4. The method according to one or several of claims 1 through 3, **characterized in that** the process is performed at column pressures in the range from 1.05 to 2.5 bara, preferably from 1.1 to 1.8 bara.

5. The method according to one or several of claims 1 through 4, **characterized in that** the weight of the non-condensable inert gas is 0.44 to 5.8 times, preferably 1.8 to 5.4 times the weight of the feeding quantity (aqueous solution of HA salt).

## Revendications

1. Procédé pour produire une solution aqueuse d'hydroxylamine (HA) libre par traitement simultané à contre-courant d'une solution d'un sel de HA avec de l'ammoniac ou de l'eau ammoniacale, séparation par distillation de la solution obtenue en des solutions aqueuses de HA et une fraction de sel sous une pression supérieure à la pression atmosphérique, concentration par distillation de la solution aqueuse de HA à contre-courant avec un milieu de stripage dans une colonne de distillation à réaction comportant un évaporateur à puits, **caractérisé en ce qu'**on utilise comme milieu de stripage un mélange de vapeur d'eau et d'un gaz inerte non condensable et on règle la température du processus pour une pression fixée au moyen de la quantité de gaz inerte non condensable à l'entrée de la colonne.

2. Procédé selon la revendication 1, **caractérisé en ce qu'**on utilise de l'azote comme gaz inerte non condensable.

3. Procédé selon les revendications 1 et 2, **caractérisé en ce que** la régulation de la température du processus est exécutée par accroissement du pourcentage d'un gaz inerte non condensable pour obtenir une réduction de la température, ou par réduction du pourcentage de ce gaz pour obtenir un accroissement de la température.

4. Procédé selon une ou plusieurs des revendications 1 à 3, **caractérisé en ce qu'**on exécute le processus avec une pression dans la colonne dans la gamme de 1,05 à 2,5 bars, de préférence de 1,1 à 1,8 bar.

5. Procédé selon une ou plusieurs des revendications 1 à 4, **caractérisé en ce que** le rapport du poids du gaz inerte non condensable à la quantité d'alimentation (solution aqueuse du sel de HA) s'étend de 0,44 à 5,8 fois, de préférence de 1,8 à 5,4 fois.
